# DEMANDE DE BREVET EUROPEEN

(11) **EP 4 834 730 A1**
(43) Date de publication de la demande: **04.11.2026**
(21) Numéro de dépôt: 26175311.5
(22) Date de dépôt: 29.04.2026
(51) Int. Cl.: B62D 25/08

(54) **SUPPORT DE SUSPENSION COMPORTANT UN RENFORT LATERAL ET SYSTEME DE SUSPENSION EQUIPE D'UN TEL SUPPORT**

(30) Priorité: 30.04.2025 FR 2504623
(71) Demandeur: Flexis, 92100 Boulogne Billancourt (FR)
(72) Inventeur: DELORD, Christian, 78640 VILLIERS-SAINT-FREDERIC (FR); LE GOIC, Pierre, 78280 GUYANCOURT (FR)
(74) Mandataire: Lavoix

(57) **Abrégé**

La présente invention concerne un support de suspension (24) pour un véhicule automobile, le support de suspension (24) comportant :
- une coupelle (26) qui est prévue pour la fixation haute d'un amortisseur (20) selon un axe principal de suspension (A1),
- une paroi axiale principale (32) semi cylindrique qui est coiffée par la coupelle (26),
- un renfort latéral (82) qui est rapporté et qui est fixé, de préférence soudé, sur le bord latéral extérieur (84) de la coupelle (26),
- un renfort supérieur (92) qui recouvre la coupelle (26) et le renfort latéral (82), et qui est fixé, de préférence soudé, à la coupelle (26) et au renfort latéral (82).

## Description

La présente invention concerne un support de suspension pour un véhicule automobile. La présente invention concerne également un système de suspension et le véhicule qui en est équipé.

On connaît différentes solutions pour le montage d'un système de suspension, ou suspension, notamment dans la partie avant d'un véhicule automobile.

Lorsqu'il s'agit d'équiper le véhicule d'un système de suspension à double triangulation, il est nécessaire que le support de suspension possède une certaine rigidité afin de supporter les efforts. Ceci est particulièrement le cas lorsque le véhicule est un véhicule utilitaire qui doit pouvoir transporter des charges relativement lourdes.

On connaît déjà des supports de suspension renforcés pour le montage d'une suspension à double triangulation. Toutefois, les solutions existantes ne sont pas toujours adaptées aux contraintes spécifiques de certains véhicules.

Un but de l'invention est alors de proposer un support de suspension qui soit suffisamment rigide pour supporter des contraintes élevées en charge, tout en étant facile à fabriquer et à assembler.

A cet effet, l'invention a pour objet un support de suspension pour un véhicule automobile, le support de suspension comportant :
- une coupelle qui est prévue pour la fixation haute d'un amortisseur selon un axe principal de suspension,
- une paroi axiale principale semi cylindrique qui est coiffée par la coupelle,
- un renfort latéral qui est rapporté et qui est fixé, de préférence soudé, sur le bord latéral extérieur de la coupelle,
- un renfort supérieur qui recouvre la coupelle et le renfort latéral, et qui est fixé, de préférence soudé, à la coupelle et au renfort latéral.

Le support de suspension selon l'invention permet d'obtenir des performances optimales, notamment en terme de raideur dynamique et d'endurance, ce qui permet de limiter la transmission des vibrations dans le véhicule et ce qui réduit les bruits engendrés par ces vibrations. Le système de suspension est capable de supporter des contraintes élevées, notamment lorsque le véhicule est chargé, tout en garantissant un comportement du véhicule sain et un confort de bon niveau.

La réalisation du support de suspension selon l'invention est facile à mettre en œuvre, sans avoir à utiliser des pièces coûteuses et/ou complexes. L'intégration de ce support de suspension dans le véhicule est relativement simple puisqu'elle ne nécessite pas de modifier profondément la structure du véhicule par rapport à un véhicule standard.

Suivant d'autres aspects avantageux de l'invention, le support de suspension comprend une ou plusieurs des caractéristiques suivantes, prises isolément ou suivant toutes les combinaisons techniquement possibles :
- le renfort latéral comporte un tronçon de paroi axiale intérieure qui est plaqué et soudé sur le bord latéral extérieur de la coupelle, et deux tronçons de paroi d'extrémité qui sont plaqués et soudés respectivement sur deux ailes longitudinales appartenant à la paroi axiale principale ;
- les ailes longitudinales sont agencées dans le prolongement d'une paroi externe d'un longeron du véhicule ;
- le renfort latéral a globalement une section axiale en U inversé ;
- le renfort latéral comporte une paroi sommitale qui est plaquée et soudée contre la face inférieure du renfort supérieur ;
- le renfort latéral comporte un tronçon de paroi axiale extérieure qui est plaqué et soudé sur un tronçon de paroi axiale extérieure du renfort supérieur ;
- le tronçon de paroi axiale extérieure du renfort latéral forme un décrochement vers l'intérieur dans un bord extérieur du renfort latéral ;
- le renfort supérieur comporte deux portions latérales qui s'étendent transversalement vers l'extérieur, de part et d'autre du tronçon de paroi axiale extérieure du renfort latéral, et qui prévues pour être soudées sur un flanc de la caisse du véhicule.

L'invention propose aussi un système de suspension de véhicule automobile comportant :
- un support de suspension selon l'une quelconque des caractéristiques précédentes,
- un bras de suspension supérieur qui est monté pivotant sur la paroi axiale principale,
- un bras de suspension inférieur,
- un amortisseur dont l'extrémité supérieure est fixée à la coupelle.

L'invention propose également un véhicule automobile caractérisé en ce qu'il comprend un système de suspension selon les caractéristiques précédentes.

L'invention apparaîtra plus clairement à la lecture de la description qui va suivre, donnée uniquement à titre d'exemple non limitatif, et faite en référence aux dessins dans lesquels :
[Fig. 1] la figure 1 est un schéma qui illustre un véhicule automobile équipé d'un système de suspension avant ;
[Fig. 2] la figure 2 est une vue de face qui représente partiellement la partie avant gauche du véhicule de la figure 1 comprenant un système de suspension à double triangulation et un support de suspension conforme aux enseignements de l'invention ;
[Fig. 3] la figure 3 est une vue en perspective éclatée qui représente les principaux éléments du support de suspension de la figure 2 ;
[Fig. 4] la figure 4 est une vue en coupe transversale selon le plan IV-IV de la figure 6 qui représente le montage du bras de suspension supérieur sur le support de suspension de la figure 2 ;
[Fig. 5] la figure 5 est une vue en coupe axiale transversale selon le plan V-V de la figure 6 qui représente les principaux éléments du support de suspension de la figure 2, sans le système de suspension ;
[Fig. 6] la figure 6 est une vue en coupe axiale longitudinale selon le plan VI-VI de la figure 6 qui représente une partie du système de suspension de la figure 2 avec les pivots de son bras de suspension supérieur monté sur le support de suspension.

Dans la suite de la description, des éléments identiques ou similaires seront dans certains cas désignés par les mêmes chiffres de référence.

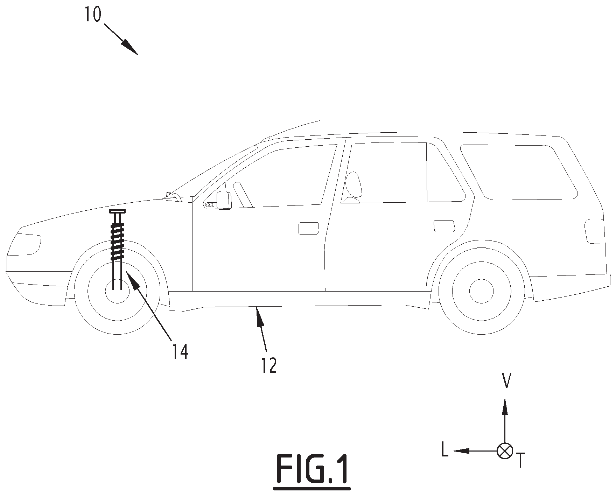

Sur la figure 1, on a représenté schématiquement un véhicule 10 tel qu'un véhicule automobile utilitaire, notamment un fourgon.

Dans la suite de la description, on utilisera à titre non limitatif une orientation selon un repère V, L, T, représenté sur les figures, correspondant à des directions verticale V, longitudinale L, et transversale T, la direction longitudinale L correspondant à l'orientation générale du véhicule 10. La direction longitudinale L est ici orientée de l'arrière vers l'avant, ce qui correspond à une orientation de la droite vers la gauche en considérant la figure 1.

La direction transversale T est orientée ici de l'extérieur vers l'intérieur du véhicule 10, de la droite vers la gauche en considérant la figure 1.

Selon le mode de réalisation représenté, le véhicule 10 comporte une caisse 12 formée notamment d'éléments en tôle emboutie assemblés les uns sur les autres. Ces éléments en tôle emboutie sont par exemple soudés les uns aux autres. Des rivets et/ou de la colle peuvent aussi être utilisés pour cet assemblage.

Le véhicule 10 comporte, pour chaque roue, un système de suspension 14.

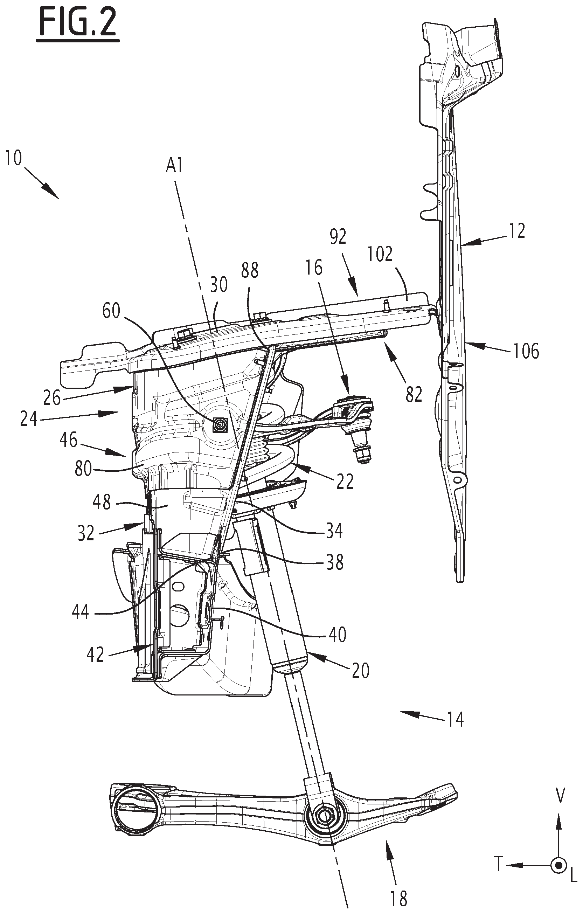

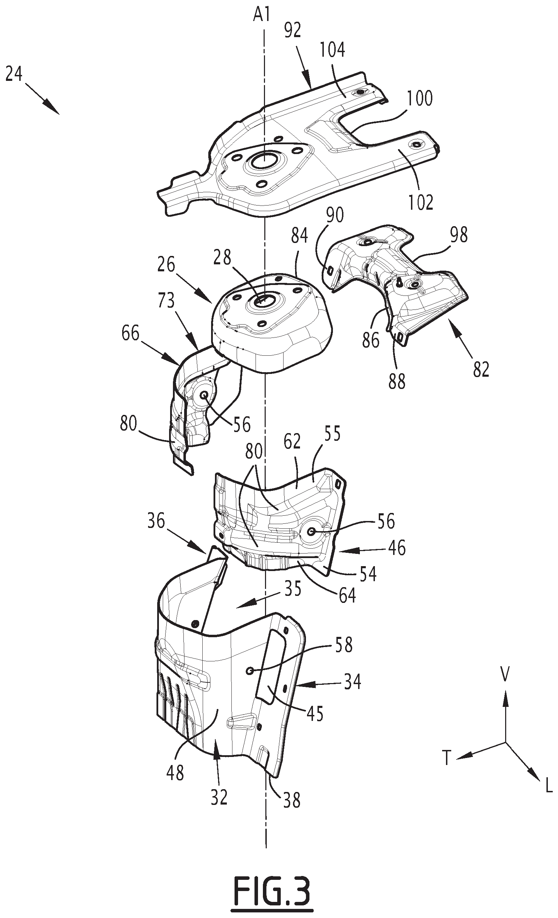

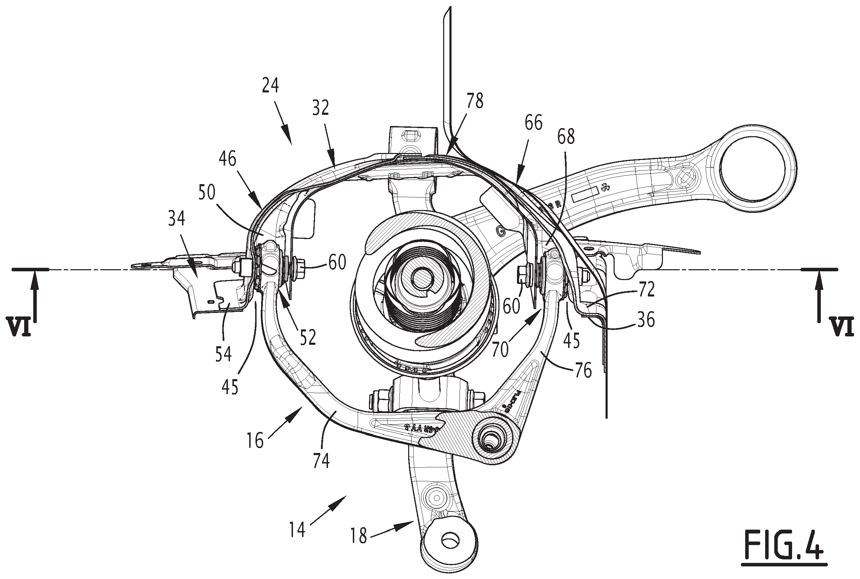

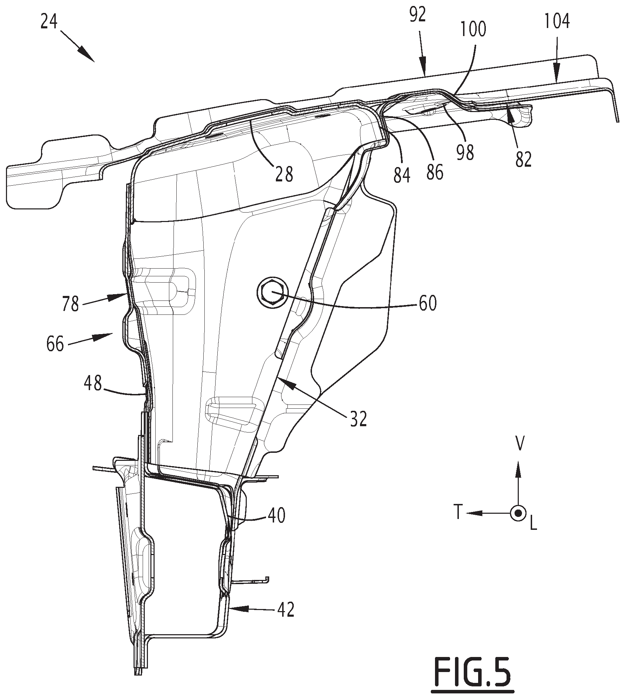

On décrit maintenant plus en détail le système de suspension 14 agencé à l'avant et à gauche sur le véhicule 10, en considérant notamment les figures 2 à 6. Le système de suspension 14 comporte un bras de suspension supérieur 16, un bras de suspension inférieur 18, un amortisseur 20 télescopique, et un ressort hélicoïdal 22.

A titre non limitatif, on définit une direction axiale de suspension A1 selon l'axe principal de l'amortisseur 20 et du ressort hélicoïdal 22.

Bien entendu, le système de suspension avant droit est identique au système de suspension 14 avant gauche, en considérant un plan de symétrie longitudinale.

Le véhicule 10 comporte un support de suspension 24 qui permet le montage du système de suspension 14 sur la caisse 12.

Le support de suspension 24 comporte une coupelle 26 qui est prévue pour la fixation haute de l'amortisseur 20. La coupelle 26 comporte en particulier un orifice principal 28 dans lequel l'extrémité axiale supérieure 30 de l'amortisseur 20 est vissée.

Le support de suspension 24 comporte une paroi axiale principale 32 semi cylindrique qui est coiffée par la coupelle 26. La coupelle 26 est par exemple soudée avec le bord supérieur 33 de la paroi axiale principale 32.

La paroi axiale principale 32 définit un logement 35 en forme de gouttière, selon la direction axiale de suspension A1, qui enveloppe partiellement l'amortisseur 20 et le ressort hélicoïdal 22, du côté intérieur du véhicule 10.

La paroi axiale principale 32 se prolonge ici par deux ailes longitudinales 34, 36 opposées. Chaque aile longitudinale 34, 36 s'étend ici dans un plan légèrement incliné par rapport à un plan vertical longitudinal.

Avantageusement, le bord d'extrémité inférieure 38 de chaque aile longitudinale 34, 36 est positionné à proximité de la paroi externe 40 d'un longeron 42 du véhicule 10.

Selon le mode de réalisation représenté, le longeron 42 a une section sensiblement rectangulaire, selon un plan transversal.

Le bord d'extrémité inférieure 38 de chaque aile longitudinale 34 est ici fixé à la paroi externe 40 du longeron 42 par l'intermédiaire d'une plaque de liaison 44. La plaque de liaison 44 est soudée sur la face externe 40 du longeron 42 et chaque aile longitudinale 34 est soudée sur la face externe de la plaque de liaison 44.

Avantageusement, chaque aile longitudinale 34, 36 comporte une fenêtre 45, ici de forme rectangulaire, qui s'étend le long de la partie cylindrique, ou face convexe 48, de la paroi axiale principale 32.

Le support de suspension 24 comporte aussi une paroi de renfort périphérique avant 46 qui est fixée sur un tronçon avant de la face convexe 48 de la paroi axiale principale 32 de manière à former un espace intercalaire avant 50 apte à recevoir un pivot avant 52 pour le bras de suspension supérieur 16.

La paroi de renfort périphérique avant 46 permet de renforcer structurellement la paroi axiale principale 32 et donc le support de suspension 24, en apportant plus de rigidité à l'ensemble. Elle permet d'atteindre une rigidité suffisante pour pouvoir supporter le pivot avant 52.

La paroi de renfort périphérique avant 46 possède une forme générale incurvée qui suit la face convexe 48 de la paroi axiale principale 32.

L'espace intercalaire avant 50 débouche vers l'extérieur, au droit de la fenêtre 45 formée dans l'aile longitudinale avant 34.

La paroi de renfort périphérique avant 46 comporte, du côté de l'aile longitudinale avant 34, une portion de fixation 54 qui est recourbée vers l'avant, par rapport au reste de la paroi de renfort périphérique avant 46, de manière à pouvoir être plaquée contre l'aile longitudinale avant 34 et de manière à pouvoir être soudée sur l'aile longitudinale avant 34.

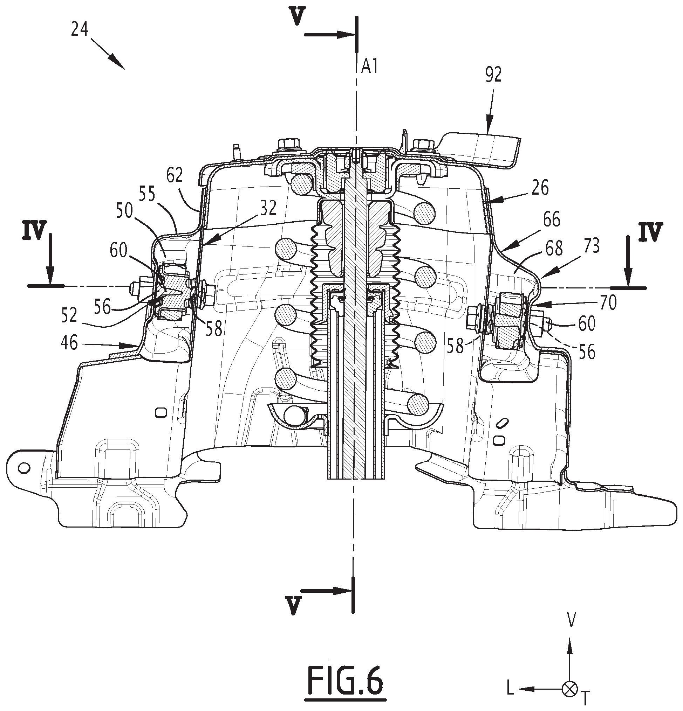

La paroi de renfort périphérique avant 46 comporte un tronçon avant 55, adjacent à l'aile longitudinale avant 34, dont le profil, selon un plan axial, a globalement la forme d'un oméga ou d'un chapeau, comme illustré sur la vue en coupe axiale de la figure 6. Ce tronçon avant 55 forme ainsi un bossage à l'extérieur de la paroi axiale principale 32 qui délimite l'espace intercalaire avant 50, entre la paroi axiale principale 32 et la paroi de renfort périphérique avant 46.

La paroi de renfort périphérique avant 46 forme ainsi, avec la face convexe 48 de la paroi axiale principale 32, une double peau qui s'écarte au niveau de l'espace intercalaire avant 50 pour recevoir le pivot avant 52.

Le tronçon avant 55 de la paroi de renfort périphérique avant 46 et la portion de paroi axiale principale 32 en vis-à-vis sont pourvus chacun d'un perçage 56, 58 qui permet la fixation du pivot avant 52 au moyen d'une vis de fixation 60 au travers des deux perçages 56, 58.

Avantageusement, le tronçon avant 55 est aplati au niveau du perçage 56 associé.

On note que la paroi de renfort périphérique avant 46 comporte une bande supérieure 62 et une bande inférieure 64, de part et d'autre du tronçon avant 55, qui s'étendent verticalement en directions opposées et qui sont plaquées contre la face convexe 48 de la paroi axiale principale 32.

Le support de suspension 24 comporte une paroi de renfort périphérique arrière 66 qui est fixée sur un tronçon arrière de la face convexe 48 de la paroi axiale principale 32 de manière à former un espace intercalaire arrière 68 apte à recevoir un pivot arrière 70 pour le bras de suspension supérieur 16.

La paroi de renfort périphérique arrière 66 a une forme générale similaire à celle de la paroi de renfort périphérique avant 46, selon un plan de symétrie transversal passant par la direction axiale de suspension A1.

Ainsi, la paroi de renfort périphérique arrière 66 comporte, du côté de l'aile longitudinale arrière 36, une portion de fixation 72 qui est recourbée vers l'arrière, par rapport au reste de la paroi de renfort périphérique arrière 66, de manière à pouvoir être plaquée contre l'aile longitudinale arrière 36 et de manière à pouvoir être soudée sur l'aile longitudinale arrière 36.

La paroi de renfort périphérique arrière 66 comporte un tronçon arrière 73, adjacent à l'aile longitudinale arrière 36, dont le profil, selon un plan axial, a globalement la forme d'un oméga ou d'un chapeau, comme la paroi de renfort périphérique avant 46. Ce tronçon arrière 73 forme ainsi un bossage à l'extérieur de la paroi axiale principale 32 qui délimite l'espace intercalaire arrière 68, entre la paroi axiale principale 32 et la paroi de renfort périphérique arrière 66.

Le tronçon arrière 73 de la paroi de renfort périphérique arrière 66 et la portion de paroi axiale principale 32 en vis-à-vis sont pourvus chacun d'un perçage 56, 58 qui permet la fixation du pivot arrière 70 au moyen d'une vis de fixation 60 au travers des deux perçages 56, 58.

L'espace intercalaire arrière 68 débouche vers l'extérieur au droit de la fenêtre 45 formée dans l'aile longitudinale arrière 36.

Le bras de suspension supérieur 16 comporte, du côté intérieur du véhicule, une branche avant 74 et une branche arrière 76 qui sont montées pivotantes, par leurs extrémités libres, sur le support de suspension 24, par l'intermédiaire des pivots avant 52 et arrière 70 respectivement.

Ainsi, chaque branche 74, 76 du bras de suspension supérieur 16 passe par la fenêtre 45 associée et a son extrémité libre reçue dans l'espace intercalaire 50, 68 associé.

Avantageusement, les deux parois de renfort périphériques 46, 66 comportent une portion de recouvrement 78 où l'une des parois de renfort périphériques 46, 66, ici la paroi de renfort périphérique avant 46, est fixée sur l'autre paroi de renfort périphérique 46, 66, ici la paroi de renfort périphérique arrière 66.

De préférence, chaque paroi de renfort périphérique 46, 66 comporte des nervures de rigidification 80 qui s'étendent circonférentiellement par rapport à la paroi axiale principale 32.

Avantageusement, un renfort latéral 82 est rapporté et fixé, de préférence par soudure, contre le bord latéral extérieur 84 de la coupelle 26.

Le renfort latéral 82 se présente sous la forme d'une plaque de tôle découpée et emboutie comportant un tronçon de paroi axiale intérieure 86 qui épouse la forme du bord latéral extérieur 84 pour pouvoir être plaqué et soudé sur ledit bord latéral extérieur 84.

De plus, le renfort latéral 82 comporte deux tronçons de paroi d'extrémité 88, 90, agencés aux extrémités longitudinales du tronçon de paroi axiale intérieure 86, qui sont plaqués et soudés respectivement sur les ailes longitudinales 34, 36 appartenant à la paroi axiale principale 32.

Selon le mode de réalisation représenté, le renfort latéral 82 a globalement un profil en section axiale en forme de U inversé.

Avantageusement, le support de suspension 24 comporte un renfort supérieur 92 qui se présente sous la forme d'une plaque de tôle découpée et emboutie qui recouvre la coupelle 26 et le renfort latéral 82.

Le renfort supérieur 92 est soudé sur la coupelle 26 et sur le renfort latéral 82.

Le renfort latéral 82 comporte une paroi sommitale 94 qui est plaquée et soudée contre la face inférieure 96 du renfort supérieur 92.

Le renfort supérieur 92 comporte deux portions latérales 102, 104 qui s'étendent transversalement vers l'extérieur, de part et d'autre du tronçon de paroi axiale extérieur 98 du renfort latéral 82, et qui sont soudées sur un flanc 106 de la caisse 12 du véhicule 10.

Selon le mode de réalisation représenté, le renfort supérieur 92 a globalement la forme d'une plaque transversale dont les deux portions latérales 102, 104 forment un U.

Le renfort latéral 82 comporte ici un tronçon de paroi axiale extérieure 98 qui est plaqué et soudé sur un tronçon de paroi axiale extérieure 100 du renfort supérieur 92.

Le tronçon de paroi axiale extérieure 98 du renfort latéral 82 forme ici un décrochement vers l'intérieur dans un bord extérieur du renfort latéral 82. Ce décrochement correspond à la portion de paroi du renfort supérieur 92 située entre les deux portions latérales 102, 104.

De préférence, les différents composants du support de suspension 24 sont réalisés en tôle emboutie puis soudés les uns aux autres et soudés sur la structure du véhicule 10.

Toute caractéristique décrite ci-dessus pour un mode de réalisation ou une variante est applicable aux autres modes de réalisation et variantes, pour autant que cela est techniquement possible.

## Revendications

1. Support de suspension (24) pour un véhicule automobile, le support de suspension (24) comportant :
- une coupelle (26) qui est prévue pour la fixation haute d'un amortisseur (20) selon un axe principal de suspension (A1),
- une paroi axiale principale (32) semi cylindrique qui est coiffée par la coupelle (26),
- un renfort latéral (82) qui est rapporté et qui est fixé, de préférence soudé, sur le bord latéral extérieur (84) de la coupelle (26),
- un renfort supérieur (92) qui recouvre la coupelle (26) et le renfort latéral (82), et qui est fixé, de préférence soudé, à la coupelle (26) et au renfort latéral (82).

2. Support de suspension (24) selon la revendication précédente, **caractérisé en ce que** le renfort latéral (82) comporte un tronçon de paroi axiale intérieure (86) qui est plaqué et soudé sur le bord latéral extérieur (84) de la coupelle (26), et deux tronçons de paroi d'extrémité (88, 90) qui sont plaqués et soudés respectivement sur deux ailes longitudinales (34, 36) appartenant à la paroi axiale principale (32).

3. Support de suspension (24) selon la revendication précédente, **caractérisé en ce que** les ailes longitudinales (34, 36) sont agencées dans le prolongement d'une paroi externe (40) d'un longeron (42) du véhicule (10).

4. Support de suspension (24) selon l'une quelconque des revendications précédentes, **caractérisé en ce que** le renfort latéral (82) a globalement une section axiale en U inversé.

5. Support de suspension (24) selon l'une quelconque des revendications précédentes, **caractérisé en ce que** le renfort latéral (82) comporte une paroi sommitale (94) qui est plaquée et soudée contre la face inférieure (96) du renfort supérieur (92).

6. Support de suspension (24) selon l'une quelconque des revendications précédentes, **caractérisé en ce que** le renfort latéral (82) comporte un tronçon de paroi axiale extérieure (98) qui est plaqué et soudé sur un tronçon de paroi axiale extérieure (100) du renfort supérieur (92).

7. Support de suspension (24) selon la revendication précédente, **caractérisé en ce que** le tronçon de paroi axiale extérieure (98) du renfort latéral (82) forme un décrochement vers l'intérieur dans un bord extérieur du renfort latéral (82).

8. Support de suspension (24) selon la revendication précédente, **caractérisé en ce que** le renfort supérieur (92) comporte deux portions latérales (102, 104) qui s'étendent transversalement vers l'extérieur, de part et d'autre du tronçon de paroi axiale extérieure (98) du renfort latéral (82), et qui sont prévues pour être soudées sur un flanc (106) de la caisse (12) du véhicule (10).

9. Système de suspension (14) de véhicule (10) automobile comportant :
- un support de suspension (24) selon l'une quelconque des revendications précédentes,
- un bras de suspension supérieur (16) qui est monté pivotant sur la paroi axiale principale (32),
- un bras de suspension inférieur (18),
- un amortisseur (20) dont l'extrémité supérieure (30) est fixée à la coupelle (26).

10. Véhicule (10) automobile **caractérisé en ce qu'**il comprend un système de suspension (14) selon la revendication précédente.
